# EUROPÄISCHE PATENTSCHRIFT

(11) **EP 2 930 356 B1**
(45) Veröffentlichungstag und Bekanntmachung des Hinweises auf die Patenterteilung: **30.01.2019**
(21) Anmeldenummer: 14164231.4
(22) Anmeldetag: 10.04.2014
(51) Int. Cl.: F03D 80/30, F03D 1/06

(54) **Windenergieanlagenrotorblatt mit einem Blitzschutzsystem**
Wind turbine rotor blade with a lightning protection system
Pale de rotor d'éolienne dotée d'un système de protection contre la foudre

(43) Veröffentlichungstag der Anmeldung: 14.10.2015
(73) Patentinhaber: Nordex Energy GmbH, 22419 Hamburg (DE)
(72) Erfinder: Rehm, Wolfgang Dr., DE - 93053 Regensburg (DE); Baars, Peter, DE - 23974 Krusenhagen (DE)
(74) Vertreter: Hauck Patentanwaltspartnerschaft mbB

(56) Entgegenhaltungen:
- EP-A1- 2 806 160
- WO-A1-00/79128
- WO-A1-2014/023734
- DE-U1- 8 403 264
- US-A- 2 740 915
- US-A- 3 229 145

## Beschreibung

Die Erfindung betrifft ein Windenergieanlagenrotorblatt mit einem Blitzschutzleiter und einer weiteren elektrischen Leitung, die galvanisch von dem Blitzschutzleiter getrennt ist.

Es ist bekannt, Windenergieanlagenrotorblätter mit einer Blitzschutzeinrichtung vor Schäden durch Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Besondere Schwierigkeiten entstehen, wenn innerhalb des Windenergieanlagenrotorblatts mehrere elektrisch leitfähige Elemente mehr oder weniger parallel angeordnet sind. Infolge der hohen Blitzströme kommt es dann durch elektromagnetische Induktion zu großen Potentialdifferenzen zwischen den unterschiedlichen elektrisch leitfähigen Elementen, die zu Überschlägen und dadurch zu einer Beschädigung oder gar Zerstörung des Windenergieanlagenrotorblatts führen können. Es ist bekannt, derartigen Überschlägen durch Potentialausgleichselemente entgegenzuwirken.

Hierzu können die leitfähigen Elemente über elektrische Leitungen miteinander verbunden werden. Beispielsweise zeigt die Druckschrift EP 1 692 752 B1 ein Windenergieanlagenrotorblatt, bei dem ein innenliegender, elektrisch leitfähiger Holm mit einem benachbart angeordneten Blitzschutzleiter verbunden ist. Hierzu sind Potentialausgleichselemente vorgesehen, die den Holm und den Blitzschutzleiter über eine elektrische Leitung miteinander verbinden. Der Kontakt zum Holm wird über ein leitfähiges, flächiges Band hergestellt.

Aus der Druckschrift EP 1 112 448 B2 ist ein Windenergieanlagenrotorblatt mit mehreren elektrisch leitfähigen Gurten aus einem Kohlenstofffasermaterial bekannt geworden. Die Gurte und ein zusätzlicher, metallischer Blitzschutzleiter sind an mehreren Längspositionen über Potentialausgleichelemente in Form von innenliegenden, elektrischen Leitern miteinander verbunden.

Eine galvanische Verbindung zwischen einem geerdeten Blitzschutzleiter und einer benachbart angeordneten, weiteren elektrischen Leitung kommt nicht in Betracht, wenn die weitere Leitung zur Übertragung elektrischer Leistung oder von Signalen dienen soll. In diesem Fall soll ein Potentialausgleich nur im Falle eines Blitzschlags erfolgen. Hierzu ist aus der Druckschrift WO 00/79128 A1 ein Windenergieanlagenrotorblatt mit einem zentral angeordneten Blitzschutzleiter und zwei weiteren elektrischen Leitungen bekannt geworden, die ebenfalls in Längsrichtung des Rotorblatts verlaufen und zur Bestromung einer elektrischen Heizeinrichtung dienen. Sie sind im Bereich der Blattspitze über Funkenstrecken mit dem zentralen Blitzschutzleiter verbunden.

Die Druckschrift WO 2014/023734 A1 zeigt ein Windenergieanlagenrotorblatt mit einer Widerstandsheizung, bei dem ein Potentialausgleich zwischen unterschiedlichen Leitern mithilfe von Funkenstrecken vorgesehen ist.

US-Patent Nr. 2,740,915 zeigt eine Vakuumschaltkammer mit zwei Kontaktelementen, deren Abstand voneinander mithilfe eines Drehknopfs justiert werden kann. Hierzu wird das in einer Buchse verschieblich gelagerte Kontaktelement gegen das Vakuum aus dem Glaskolben herausgezogen.

DE 84 03 264 U1 beschreibt eine Vakuumschaltkammer zur Verwendung als gekapselter elektrischer Schalter für explosionsgefährdete Betriebsstätten. US-Patent Nr. 3,229,145 beschreibt eine in einem dielektrischen Medium angeordnete Funkenstrecke, die innerhalb eines Porzellanisolators angeordnet ist.

EP 2806160 A1 offenbart ein Windenergieanlagenrotorblatt mit einem Blitzschutzsystem mit einer Funkenstrecke und/oder einer Vakuumschaltröhre.

Davon ausgehend ist es die Aufgabe der Erfindung, ein Windenergieanlagenrotorblatt mit einem Blitzschutzleiter und einer weiteren elektrischen Leitung, die galvanisch von dem Blitzschutzleiter getrennt ist, zur Verfügung zu stellen, das vor Beschädigungen durch Blitzschlag wirksam und dauerhaft geschützt ist.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat einen Blitzschutzleiter, eine weitere elektrische Leitung, die galvanisch von dem Blitzschutzleiter getrennt ist, eine Vakuumschaltkammer mit einem ersten Kontaktstück, das mit dem Blitzschutzleiter verbunden ist, und einem zweiten Kontaktstück, das mit der weiteren elektrischen Leitung verbunden ist, und eine Befestigungseinrichtung, die die beiden Kontaktstücke in einem vorgegebenen Abstand voneinander hält.

Das Windenergieanlagenrotorblatt kann für eine Windenergieanlage mit im Wesentlichen horizontaler Achse bestimmt sein. Es kann aus einem Faserverbundmaterial hergestellt sein, insbesondere aus zwei miteinander verbundenen Halbschalen. Es kann eine aerodynamische Hülle, die zum Beispiel von den Außenseiten der beiden Halbschalen gebildet ist, sowie einen oder mehrere Gurte aufweisen, beispielsweise aus glasfaser- oder kohlenstofffaserverstärktem Kunststoff. Die beiden Halbschalen können über einen oder mehrere Stege miteinander verbunden sein, die insbesondere zwischen zwei einander gegenüberliegenden Hauptgurten angeordnet sein können.

Der Blitzschutzleiter kann sich im Wesentlichen über die gesamte Länge des Windenergieanlagenrotorblatts erstrecken, insbesondere von einem Anschlusspunkt im Bereich der Blattwurzel bis in den Bereich der Blattspitze. Dort kann er mit einem an der Blattspitze angeordneten Blitzschutzrezeptor verbunden sein. Es können auch mehrere Blitzschutzleiter vorhanden sein, beispielsweise in annähernd paralleler Anordnung entlang einer Druckseite und einer Saugseite des Windenergieanlagenrotorblatts.

Eine Vakuumschaltkammer ist ein zum Schalten großer Stromstärken insbesondere im Mittelspannungsbereich bewährtes Bauelement. Sie weist zwei Kontaktstücke auf, die in einer evakuierten Kammer angeordnet sind. Im geschlossenen Schaltzustand berühren die beiden Kontaktstücke einander. Um den Stromkreis zu unterbrechen, können die beiden Kontaktstücke voneinander entfernt werden. Da die Kontaktstücke im Vakuum angeordnet sind, kann es dabei anders als bei Funkenstrecken nicht zu einer selbstständigen thermischen Gasentladung in Form eines Lichtbogens kommen. Darum kann mit Vakuumschaltkammern eine besonders zuverlässige Kontaktunterbrechung und ein langzeitstabiles Schaltverhalten erzielt werden.

Die Erfinder haben erkannt, dass eine Vakuumschaltkammer zur Herstellung eines Potentialausgleichs zwischen einem Blitzschutzleiter und einer weiteren Leitung in einem Windenergieanlagenrotorblatt geeignet ist, wenn die beiden Kontaktstücke in einem vorgegebenen Abstand voneinander fixiert werden. Der Abstand zwischen den beiden Kontaktstücken kann beispielsweise im Bereich von 0,5 mm bis 5 mm, bevorzugt im Bereich von etwa 1 mm bis etwa 2,5 mm liegen. In diesem Fall kommt es bei den im Falle eines Blitzschlags auftretenden Potentialdifferenzen zu einem Überschlag zwischen den beiden Kontaktstücken und damit einhergehend zu dem gewünschten Potentialausgleich. Wegen ihrer hohen Strombelastbarkeit kann die Vakuumschaltkammer selbst bei häufig auftretenden Blitzschlägen dauerhaft eingesetzt werden, gegebenenfalls über die gesamte Lebensdauer des Windenergieanlagenrotorblatts hinweg. Sie ist zudem als vorgefertigtes, qualitätsgeprüftes Bauteil verfügbar und weitgehend wartungsfrei. Die Vakuumschaltkammer hat eine geringe Baugröße und kann daher besonders vorteilhaft im Bereich der Rotorblattspitze eingesetzt werden.

Für die bei typischen Anwendungen vorgesehenen Schaltvorgänge sind die beiden Kontaktstücke der Vakuumschaltkammer relativ zueinander beweglich angeordnet. In der Regel müssen die beiden Kontaktstücke unter Überwindung einer von dem Umgebungsdruck ausgeübten Kraft voneinander entfernt werden, um den Schaltkontakt zu öffnen. Bei der Erfindung wird eine Befestigungseinrichtung eingesetzt, die die beiden Kontaktstücke in dem vorgegebenen Abstand voneinander hält. Hierzu kann die Befestigungseinrichtung insbesondere eines der beiden Kontaktstücke um eine dem vorgegebenen Abstand entsprechende Strecke aus der Vakuumschaltkammer herausziehen bzw. in dieser herausgezogenen Stellung fixieren.

In einer Ausgestaltung weist die Vakuumschaltkammer einen Vakuumschaltkammerkörper auf, wobei eines der beiden Kontaktstücke beweglich in dem Vakuumschaltkammerkörper gelagert ist und eine als Gewindestange ausgebildete Anschlussstange aufweist, die aus dem Vakuumschaltkammerkörper heraussteht. Die Befestigungseinrichtung weist einen ersten Anschlag auf, an dem der Vakuumschaltkammerkörper anliegt, sowie Befestigungsmittel zum Befestigen der Anschlussstange in einer vorgegebenen Anordnung relativ zu dem ersten Anschlag. Bei dieser Ausgestaltung kann das andere Kontaktstück nicht-beweglich an oder in dem Vakuumschaltkammerkörper befestigt sein. Die Anschlussstange kann auch als Zug- oder Schubstange bezeichnet werden und ist einteilig mit dem beweglichen Kontaktstück ausgebildet oder fest damit verbunden. Sie kann kolbenartig aus dem Vakuumschaltkammerkörper herausgezogen werden, wobei eine Abdichtung zwischen der Anschlussstange bzw. dem beweglichen Kontaktstück und dem Vakuumschaltkammerkörper beispielsweise über einen metallischen Faltenbalg hergestellt sein kann. Um den gewünschten, vorgegebenen Abstand zwischen den beiden Kontaktstücken zu erzielen, muss die Anschlussstange um eine dem vorgegebenen Abstand entsprechende Strecke aus dem Vakuumschaltkammerkörper herausgezogen werden. Mit der erfindungsgemäßen Befestigungseinrichtung wird diese vorgegebene Strecke bestimmt durch den ersten Anschlag der Befestigungseinrichtung im Zusammenwirken mit den Befestigungsmitteln zum Befestigen der Anschlussstange in einer vorgegebenen Anordnung. So kann der richtige Abstand zwischen den beiden Kontaktstücken einfach und dauerhaft eingerichtet werden.

In einer Ausgestaltung weist die Befestigungseinrichtung ein Gehäuse auf, in das die Vakuumschaltkammer eingesetzt ist. Dadurch kann die Vakuumschaltkammer vor äußeren Einwirkungen geschützt und die Anordnung der beiden Kontaktstücke im vorgegebenen Abstand voneinander besonders zuverlässig fixiert werden. Das Gehäuse besteht aus einem nicht leitenden Material, insbesondere aus einem keramischen Material oder aus einem Kunststoffmaterial, zum Beispiel AcrylnitrilButadien-Styrol-Copolymerisat (ABS).

In einer Ausgestaltung weist das Gehäuse einen zylindrischen Gehäusegrundkörper und einen unteren Gehäusedeckel auf, der in ein Innengewinde des Gehäusegrundkörpers eingeschraubt ist, sodass die Vakuumschaltkammer in dem Gehäuse eingespannt ist. Auf diese Weise wird die Vakuumschaltkammer bzw. der Vakuumschaltkammerkörper in einer vorgesehenen Anordnung innerhalb des Gehäuses fixiert. Alternativ können der Gehäusegrundkörper und der untere Gehäusedeckel einteilig ausgebildet sein.

In einer Ausgestaltung ist ein Freiraum zwischen der Vakuumschaltkammer und dem Gehäuse mit einer Vergussmasse gefüllt. Durch diese Maßnahme wird eine zusätzliche mechanische Fixierung der Vakuumschaltkammer in dem Gehäuse erzielt. Außerdem wird das Auftreten von Überschlägen bzw. Kriechströmen verhindert.

In einer Ausgestaltung weist das Gehäuse einen Lagerdeckel auf, dessen Innenseite den ersten Anschlag bildet. Insbesondere kann eine Stirnseite des Vakuumschaltkammerkörpers an diesem ersten Anschlag anliegen. Dadurch wird eine Fixierung des Vakuumschaltkammerkörpers relativ zu dem Gehäuse in einer exakt vorgegebenen Anordnung erreicht.

In einer Ausgestaltung weisen die Befestigungsmittel eine Spannhülse mit einem Flansch auf, die auf ein Gewinde der Anschlussstange aufgeschraubt ist, wobei sich der Flansch der Spannhülse an einem zweiten Anschlag des Gehäuses abstützt. Der zweite Anschlag kann beispielsweise an einer Oberseite des Lagerdeckels ausgebildet sein. Die Spannhülse kann insbesondere aus Metall bestehen, ebenso wie die Anschlussstange, sodass ein elektrischer Kontakt zu der Anschlussstange über die Spannhülse hergestellt werden kann. Die Spannhülse kann eine oder mehrere abgeflachte Seiten aufweisen, sodass zum Aufschrauben der Spannhülse ein Werkzeug angesetzt werden kann.

In einer Ausgestaltung weist das Gehäuse eine Verdrehsicherung auf, die eine Drehbewegung der Anschlussstange relativ zu dem Gehäuse verhindert. Die Verdrehsicherung kann beispielsweise mit einer abgeflachten Seite der Anschlussstange zusammenwirken. Beispielsweise kann die Anschlussstange mit ihrer abgeflachten Seite in eine komplementär ausgebildete Öffnung des Gehäuses eingesetzt werden. In diesem Fall kann die Spannhülse auf die Anschlussstange aufgeschraubt werden, ohne Kräfte auf den Vakuumschaltkammerkörper auszuüben, welche unter Umständen zu einer Beschädigung der Vakuumschaltkammer führen könnten.

In einer Ausgestaltung ist die Spannhülse so weit auf die Anschlussstange aufgeschraubt, dass sich der Flansch der Spannhülse an einer Stufe der Anschlussstange abstützt. Beispielsweise kann die Anschlussstange einen äußeren Längsabschnitt mit einem Gewinde und einen sich daran anschließenden Längsabschnitt mit einem größeren Durchmesser und wahlweise einer abgeflachten Seite als Verdrehsicherung aufweisen. In ihrer montierten Position kann sich der Flansch der Spannhülse dann an dem Längsabschnitt mit größerem Durchmesser unmittelbar oder über ein auf den Gewindeabschnitt aufgesetztes Zwischenstück abstützen. In jedem Fall wird die Anschlussstange in einer definierten Anordnung relativ zu dem Gehäuse fixiert.

Bei der Erfindung weist die Befestigungseinrichtung Befestigungsmittel auf, die eine Vergrößerung des Abstands zwischen den beiden Kontaktstücken im Falle eines Blitzschlags verhindern. Wie bereits erwähnt, bedarf es in der Regel einer erheblichen Kraft, um die beiden Kontaktstücke in der gewünschten Weise voneinander zu entfernen. Um sie in dieser Stellung zu fixieren, reicht es zunächst aus, zu verhindern, dass sich die Anschlussstange in den Vakuumschaltkammerkörper zurückbewegt. Im Falle eines Blitzschlags können jedoch auch erhebliche abstoßende Kräfte zwischen den beiden Kontaktstücken auftreten, die zu einer Vergrößerung des Abstands führen können, was den erwünschten Potentialausgleich gefährdet. Um dies zu verhindern, kann insbesondere eine weitere Bewegung der Anschlussstange aus dem Vakuumschaltkammerkörper heraus verhindert werden, zum Beispiel durch einen geeigneten Anschlag der Befestigungseinrichtung.

In einer Ausgestaltung sind die Befestigungsmittel von einem Gegenlagerdeckel des Gehäuses und dem Flansch der Spannhülse gebildet, wobei der Flansch formschlüssig zwischen dem Lagerdeckel und dem Gegenlagerdeckel gehalten ist. Bei dieser Konstruktion ist die Anschlussstange über die Spannhülse in Längsrichtung an einer Bewegung in beide Richtungen gehindert. Die Spannhülse bleibt zugleich drehbar, sodass sie auf die Anschlussstange weiter aufgeschraubt werden kann.

In einer Ausgestaltung ist ein Verbindungskabel zwischen der Spannhülse und einer auf die Anschlussstange aufgeschraubten Mutter klemmend befestigt. Hierzu kann das Verbindungskabel beispielsweise einen Kabelschuh oder ein Kabelauge aufweisen. Durch die Klemmbefestigung mit der Mutter kommt es zu einer dauerhaften Fixierung der Drehstellung der Spannhülse. Der elektrische Kontakt wird hergestellt zwischen dem Verbindungskabel und der Spannhülse, die ihrerseits mit ihrem Flansch großflächig an einem Längsabschnitt der Anschlussstange mit vergrößertem Durchmesser anliegen kann, was eine hohe Stromtragfähigkeit gewährleistet.

In einer Ausgestaltung ist die Vakuumschaltkammer für das Schalten von Stromstärken von 25 kA oder mehr ausgelegt. Beispielsweise kann sie auch für Stromstärken von 50 kA oder mehr ausgelegt sein. Versuche haben ergeben, dass Vakuumschaltkammern mit dieser Spezifikation für die äußerst kurzen Zeiträume eines Stromflusses bei einem Blitzschlag auch noch höhere Stromstärken von zum Beispiel bis zu 200 kA beschädigungsfrei überstehen.

In einer Ausgestaltung ist die Vakuumschaltkammer im Bereich einer Blattspitze des Windenergieanlagenrotorblatts angeordnet. Im Bereich der Blattspitze sind Blitzschläge besonders häufig, sodass hier mindestens ein Blitzschutzrezeptor angeordnet ist. Zugleich entstehen im Bereich der Blattspitze durch elektromagnetische Induktion besonders große Potentialdifferenzen zwischen benachbarten Leitern, sodass ein Potentialausgleichselement zur Verbindung des Blitzschutzleiters mit der weiteren Leitung eine besonders hohe Stromtragfähigkeit aufweisen muss.

In einer Ausgestaltung weist das Windenergieanlagenrotorblatt eine elektrische Heizeinrichtung auf, die über die weitere elektrische Leitung mit einem Heizstrom versorgt wird. In diesem Fall trägt der Einsatz einer Vakuumschaltkammer als Potentialausgleichselement zu einem wirksamen Schutz der elektrischen Heizeinrichtung bei. Grundsätzlich kann es sich bei der weiteren elektrischen Leitung um eine beliebige elektrische Leitung handeln, beispielsweise um eine Versorgungsleitung oder eine Signalleitung.

Die Erfindung wird nachfolgend anhand eines in Figuren dargestellten Ausführungsbeispiels näher erläutert. Es zeigen:
- Fig. 1: ein erfindungsgemäßes Windenergieanlagenrotorblatt in einer vereinfachten, perspektivischen Darstellung,
- Fig. 2: eine vereinfachte Querschnittsdarstellung durch eine Vakuumschaltkammer in einem Gehäuse.

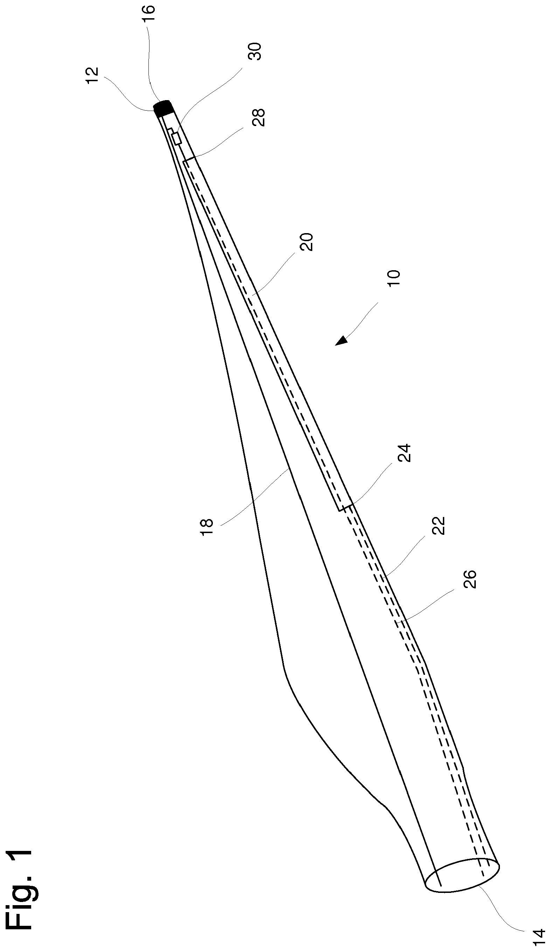

Das Windenergieanlagenrotorblatt 10 aus Fig. 1 hat eine Blattspitze 12 und eine Blattwurzel 14. Im Bereich der Blattspitze 12 ist ein Blitzschutzrezeptor 16 angeordnet. Dieser ist mit einer Blitzschutzleitung 18 verbunden, die zur Blattwurzel 14 führt.

Im Bereich einer Profilnasenkante ist an der Außenseite des Windenergieanlagenrotorblatts 10 eine elektrische Heizeinrichtung 20 angeordnet. Diese weist ein flächiges Heizelement aus einem Kohlenstofffasermaterial auf. Zur Stromversorgung der elektrischen Heizeinrichtung 20 gibt es eine erste elektrische Leitung 22, die von der Blattwurzel 14 zu einem blattwurzelseitigen Ende 24 der elektrischen Heizeinrichtung 20 führt. Eine weitere elektrische Leitung 26 dient ebenfalls zur Versorgung der elektrischen Heizeinrichtung 20 und führt von der Blattwurzel 14 bis zum blattspitzenseitigen Ende 28 der elektrischen Heizeinrichtung 20.

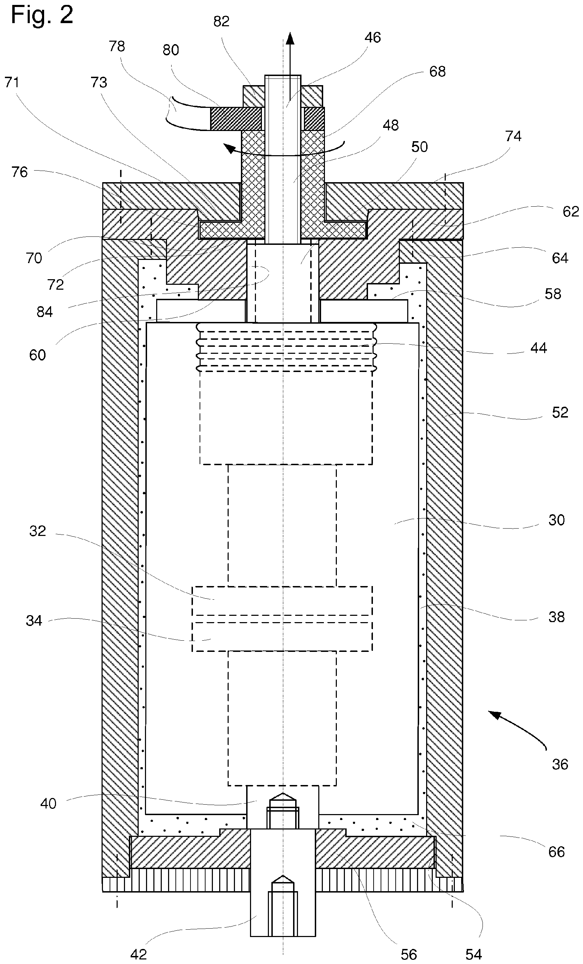

Im Bereich der Blattspitze 12 des Windenergieanlagenrotorblatts 10 ist zwischen der Blitzschutzleitung 18 und der elektrischen Leitung 26 ein Verbindung zum Potentialausgleich zwischen den beiden Leitern angeordnet, welche eine Vakuumschaltkammer 30 aufweist. Ein erstes Kontaktstück 32 (siehe Fig. 2) der Vakuumschaltkammer 30 ist mit dem Blitzschutzleiter 18 verbunden. Ein zweites Kontaktstück 34 (siehe ebenfalls Fig. 2) ist mit der weiteren elektrischen Leitung 26 verbunden.

Einzelheiten zur Anordnung der Vakuumschaltkammer 30 im Bereich der Blattspitze 12 des Windenergieanlagenrotorblatts 10 sind besser in der Fig. 2 erkennbar. Die Vakuumschaltkammer 30 befindet sich im Inneren eines aus mehreren schraffiert dargestellten Teilen zusammengefügten Gehäuses 36. Sie weist einen Vakuumschaltkammerkörper 38 mit einer zylindrischen Grundform auf.

Das zweite Kontaktstück 34 ist fest mit dem Vakuumschaltkammerkörper 38 verbunden und weist ein von außen zugängliches Anschlussstück 40 auf, das mit einer Anschlussklemme 42 verbunden ist. Die Anschlussklemme 42 ist im Beispiel mit der weiteren elektrischen Leitung 26 (nicht dargestellt) verbunden.

Das erste Kontaktstück 32 ist beweglich in dem Vakuumschaltkammerkörper 38 gelagert und gegenüber dem Vakuumschaltkammerkörper 38 luftdicht mit einem metallischen Faltenbalg 44 abgedichtet. Aus dem Vakuumschaltkammerkörper 38 herausgeführt ist eine Anschlussstange 46, die einen Längsabschnitt 48 mit Gewinde und einen sich daran anschließenden Längsabschnitt 50 mit größerem Durchmesser als der Längsabschnitt 48 mit Gewinde aufweist. Die Anschlussstange 46 mit den beiden Längsabschnitten 48, 50 ist einteilig mit dem ersten Kontaktstück 32 ausgebildet. Der Längsabschnitt 50 mit dem größeren Durchmesser weist eine durch zwei gestrichelte Linien angedeutete seitliche Abflachung auf, welche eine Verdrehsicherung relativ zum Vakuumschaltkammerkörper 38 bewirkt. Der Längsabschnitt 50 mit größerem Durchmesser ist in einer Öffnung 84 des Lagerdeckels 62 angeordnet, die komplementär zum Querschnitt des Längsabschnitts 50 geformt ist, so dass die Abflachung des Längsabschnitts 50 eine Verdrehsicherung auch relativ zu dem Lagerdeckel 62 bewirkt.

Das Gehäuse 36 weist einen Gehäusegrundkörper 52 mit einem am unteren Ende ausgebildeten Innengewinde 54 auf. Ein unterer Gehäusedeckel 56 ist in das Innengewinde 54 eingeschraubt und spannt so den Vakuumschaltkammerkörper 38 in dem Gehäuse 36 ein. Eine Stirnseite 58 des Vakuumschaltkammerkörpers 38 liegt an einem ersten Anschlag 60 an, der an einer Innenseite eines Lagerdeckels 62 ausgebildet ist.

Am oberen Ende weist der Gehäusegrundkörper 52 einen nach innen weisenden Befestigungsflansch 64 auf, der mit dem Lagerdeckel 62 verschraubt ist.

Ein Freiraum zwischen dem Vakuumschaltkammerkörper 38 und dem Gehäuse 36 ist mit einer punktiert angedeuteten Vergussmasse 66 ausgefüllt.

Eine Spannhülse 68 ist auf den Längsabschnitt 48 mit Gewinde der Anschlussstange 46 aufgeschraubt. Die Spannhülse 68 besitzt einen Flansch 76 mit einer Unterseite 70 und einer Oberseite 71. Die Unterseite 70 des Flansches 76 liegt an einer im Lagerdeckel 62 ausgebildeten Stufe, die einen zweiten Anschlag 72 bildet, an, so dass beim Aufschrauben der Spannhülse 68 die Anschlussstange 46 aus dem Vakuumschaltkammerkörper 38 herausgezogen wird und zwischen dem ersten Kontaktstück 32 und dem zweiten Kontaktstück 34 ein Spalt entsteht. Die Spannhülse 68 kann so weit auf den Längsabschnitt 48 der Anschlussstange 46 aufgeschraubt werden, bis die Oberseite des Längsabschnitts 50 an der Unterseite 70 des Flansches 76 anliegt. In diesem Montagezustand ist die Anschlussstange 46 exakt um ein von der Geometrie des Gehäuses 36 vorgegebenes Maß aus dem Vakuumschaltkammerkörper 38 herausgezogen, sodass zwischen dem ersten Kontaktstück 32 und dem zweiten Kontaktstück 34 ein vorgegebener Abstand von im Beispiel etwa 2 mm eingehalten wird. Nach dem in der Fig.2 dargestellten Montagezustand kann der Abstand zwischen dem ersten und zweiten Kontaktstück noch vergrößert werden.

Oberhalb des Lagerdeckels 62 ist ein Gegenlagerdeckel 74 befestigt, dessen Unterseite 73 an der Oberseite 71 eines Flansches 76 der Spannhülse 68 anliegt. Die Unterseite 73 des Gegenlagerdeckels 74 bildet einen Anschlag für den Flansch 76 der Spannhülse 68. Dadurch wird verhindert, dass sich die Anschlussstange 46 aus dem Vakuumschaltkörper 38 herausschieben kann, wenn sich die beiden Kontaktstücke bei einem Blitzstromdurchgang auseinander bewegen.

Ein Kabel 78 ist oberhalb der Spannhülse 68 mit einem Kabelauge 80 auf die Anschlussstange 46 aufgesetzt und klemmend mit einer Mutter 82 befestigt. Das Kabel 78 dient im Beispiel zur Verbindung mit dem Blitzschutzleiter 18.

Das Gehäuse 36 mit der Vakuumschaltkammer 30 kann im Bereich der Blattspitze 12 des Windenergieanlagenrotorblatts 10 auf beliebige Art und Weise befestigt werden, beispielsweise mit Klebeharz an einer Innenseite einer Rotorblatthalbschale.

### Liste der verwendeten Bezugszeichen:

- 10: Windenergieanlagenrotorblatt
- 12: Blattspitze
- 14: Blattwurzel
- 16: Blitzschutzrezeptor
- 18: Blitzschutzleiter
- 20: elektrische Heizeinrichtung
- 22: erste elektrische Leitung
- 24: blattwurzelseitiges Ende der Heizeinrichtung
- 26: weitere elektrische Leitung
- 28: blattspitzenseitiges Ende der Heizeinrichtung
- 30: Vakuumschaltkammer
- 32: erstes Kontaktstück
- 34: zweites Kontaktstück
- 36: Gehäuse
- 38: Vakuumschaltkammerkörper
- 40: Anschlussstück
- 42: Anschlussklemme
- 44: Faltenbalg
- 46: Anschlussstange
- 48: Längsabschnitt mit Gewinde
- 50: Längsabschnitt mit größerem Durchmesser
- 52: Gehäusegrundkörper
- 54: Innengewinde
- 56: unterer Gehäusedeckel
- 58: Stirnseite
- 60: erster Anschlag
- 62: Lagerdeckel
- 64: Befestigungsflansch
- 66: Vergussmasse
- 68: Spannhülse
- 70: Unterseite der Spannhülse
- 71: Oberseite des Flansches der Spannhülse
- 72: zweiter Anschlag
- 73: Unterseite Gegenlagerdeckel
- 74: Gegenlagerdeckel
- 76: Flansch der Spannhülse
- 78: Kabel
- 80: Kabelauge
- 82: Mutter
- 84: Öffnung

## Patentansprüche

1. Windenergieanlagenrotorblatt (10) mit einem Blitzschutzleiter (18) und einer weiteren elektrischen Leitung (26), die galvanisch von dem Blitzschutzleiter (18) getrennt ist, **gekennzeichnet durch** eine Vakuumschaltkammer (30) mit einem ersten Kontaktstück (32), das mit dem Blitzschutzleiter (18) verbunden ist, und einem zweiten Kontaktstück (34), das mit der weiteren elektrischen Leitung (26) verbunden ist, und eine Befestigungseinrichtung, die die beiden Kontaktstücke (32, 34) in einem vorgegebenen Abstand voneinander hält und die Befestigungsmittel aufweist, die eine Vergrößerung des Abstands zwischen den beiden Kontaktstücken (32, 34) im Falle eines Blitzschlags verhindern.

2. Windenergieanlagenrotorblatt (10) nach Anspruch 1, **dadurch gekennzeichnet, dass** die Vakuumschaltkammer (30) einen Vakuumschaltkammerkörper (38) aufweist, wobei eines der beiden Kontaktstücke (32, 34) beweglich in dem Vakuumschaltkammerkörper (39) gelagert ist und eine Anschlussstange (46) aufweist, die aus dem Vakuumschaltkammerkörper (38) heraussteht, wobei die Befestigungseinrichtung einen ersten Anschlag (60) aufweist, an dem der Vakuumschaltkammerkörper (38) anliegt, sowie Befestigungsmittel zum Befestigen der Anschlussstange (46) in einer vorgegebenen Anordnung relativ zu dem ersten Anschlag (60).

3. Windenergieanlagenrotorblatt (10) nach Anspruch 1 oder 2, **dadurch gekennzeichnet, dass** die Befestigungseinrichtung ein Gehäuse (36) aufweist, in das die Vakuumschaltkammer (30) eingesetzt ist.

4. Windenergieanlagenrotorblatt (10) nach Anspruch 3, **dadurch gekennzeichnet, dass** das Gehäuse (36) einen zylindrischen Gehäusegrundkörper (52) und einen Gehäuseboden aufweist, der in ein Innengewinde (54) des Gehäusegrundkörpers (52) eingeschraubt ist, so dass die Vakuumschaltkammer (30) in dem Gehäuse (36) eingespannt ist.

5. Windenergieanlagenrotorblatt (10) nach Anspruch 3 oder 4, **dadurch gekennzeichnet, dass** ein Freiraum zwischen der Vakuumschaltkammer (30) und dem Gehäuse (36) mit einer Vergussmasse (66) gefüllt ist.

6. Windenergieanlagenrotorblatt (10) nach Anspruch 2 und nach einem der Ansprüche 3 bis 5, **dadurch gekennzeichnet, dass** das Gehäuse (36) einen Lagerdeckel (62) aufweist, dessen Innenseite den ersten Anschlag (60) bildet.

7. Windenergieanlagenrotorblatt (10) nach Anspruch 2 und nach einem der Ansprüche 3 bis 6, **dadurch gekennzeichnet, dass** die Befestigungsmittel eine Spannhülse (68) mit einem Flansch (76) aufweisen, die auf ein Gewinde der Anschlussstange (46) aufgeschraubt ist, wobei sich der Flansch (76) an einem zweiten Anschlag (72) des Gehäuses (36) abstützt.

8. Windenergieanlagenrotorblatt (10) nach Anspruch 6 und 7, **dadurch gekennzeichnet, dass** die Befestigungsmittel von einem Gegenlagerdeckel (74) des Gehäuses (36) und dem Flansch (76) der Spannhülse (68) gebildet sind, wobei der Flansch (76) formschlüssig zwischen dem Lagerdeckel (62) und dem Gegenlagerdeckel (74) gehalten ist.

9. Windenergieanlagenrotorblatt (10) nach Anspruch 7 oder 8, **dadurch gekennzeichnet, dass** ein Verbindungskabel zwischen der Spannhülse (68) und einer auf die Anschlussstange (46) aufgeschraubten Mutter (82) klemmend befestigt ist.

10. Windenergieanlagenrotorblatt (10) nach einem der Ansprüche 7 bis 9, **dadurch gekennzeichnet, dass** die Spannhülse (68) so weit auf die Anschlussstange (46) aufgeschraubt ist, dass sich der Flansch (76) der Spannhülse (68) an einer Stufe der Anschlussstange (46) abstützt.

11. Windenergieanlagenrotorblatt (10) nach einem der Ansprüche 3 bis 10, **dadurch gekennzeichnet, dass** das Gehäuse (36) eine Verdrehsicherung aufweist, die eine Drehbewegung der Anschlussstange (46) relativ zu dem Gehäuse (36) verhindert.

12. Windenergieanlagenrotorblatt (10) nach einem der Ansprüche 1 bis 11, **dadurch gekennzeichnet, dass** die Vakuumschaltkammer (30) für das Schalten von Stromstärken von 25 kA oder mehr ausgelegt ist.

13. Windenergieanlagenrotorblatt (10) nach einem der Ansprüche 1 bis 12, **dadurch gekennzeichnet, dass** die Vakuumschaltkammer (30) im Bereich einer Blattspitze (14) des Windenergieanlagenrotorblatts (10) angeordnet ist.

14. Windenergieanlagenrotorblatt (10) nach einem der Ansprüche 1 bis 13, **dadurch gekennzeichnet, dass** das Windenergieanlagenrotorblatt (10) eine elektrische Heizeinrichtung (20) aufweist, die über die weitere elektrische Leitung (26) mit einem Heizstrom versorgt wird.

## Claims

1. A wind turbine rotor blade (10) with a lightning conductor (18) and another electrical line (26) which is galvanically separated from the lightning conductor (18), **characterized by** a vacuum switching chamber (30) with a first contact piece (32) that is connected to the lightning conductor (18), and a second contact piece (34) that is connected to the other electrical line (26), and a fastening apparatus which keeps both contact pieces (32, 34) at a given distance from each other and which has fastening means that prevent the distance between the two contact pieces (32, 34) from increasing in the event of a lightning strike.

2. The wind turbine rotor blade (10) according to claim 1, **characterized in that** the vacuum switching chamber (30) has a vacuum switching chamber body (38), wherein one of the two contact pieces (32, 34) is movably mounted in the vacuum switching chamber body (39) and has a connecting rod (46) which projects out of the vacuum switching chamber body (38), wherein the fastening apparatus has a first stop (60) against which the vacuum switching chamber body (38) rests, as well as fastening means for fastening the connecting rod (46) in a given arrangement relative to the first stop (60).

3. The wind turbine rotor blade (10) according to claim 1 or 2, **characterized in that** the fastening apparatus has a housing (36) in which the vacuum switching chamber (30) is inserted.

4. The wind turbine rotor blade (10) according to claim 3, **characterized in that** the housing (36) has a cylindrical housing main body (52) and a housing floor which is screwed into an inner thread (54) of the housing main body (52) such that the vacuum switching chamber (30) is clamped in the housing (36).

5. The wind turbine rotor blade (10) according to claim 3 or 4, **characterized in that** a gap between the vacuum switching chamber (30) and the housing (36) is filled with a casting compound (66).

6. The wind turbine rotor blade (10) according to claim 2 and according to one of claims 3 to 5, **characterized in that** the housing (36) has a bearing cover (62), the inside of which forms the first stop (60).

7. The wind turbine rotor blade (10) according to claim 2 and according to one of claims 3 to 6, **characterized in that** the fastening means have a clamping sleeve (68) with a flange (76) which is screwed onto a thread of the connecting rod (46), wherein the flange (76) is supported by the second stop (72) of the housing (36).

8. The wind turbine rotor blade (10) according to claim 6 and 7, **characterized in that** the fastening means are formed by a counter bearing cover (74) of the housing (36) and the flange (76) of the clamping sleeve (68), wherein the flange (76) is held in a form fit between the bearing cover (62) and the counter bearing cover (74).

9. The wind turbine rotor blade (10) according to claim 7 or 8, **characterized in that** a connecting cable is fastened in a clamping manner between the clamping sleeve (68) and a nut (82) screwed onto the connecting rod (46).

10. The wind turbine rotor blade (10) according to one of claims 7 to 9, **characterized in that** the clamping sleeve (68) is screwed far enough onto the connecting rod (46) so that the flange (76) of the clamping sleeve (68) is supported by a step of the connecting rod (46).

11. The wind turbine rotor blade (10) according to one of claims 3 to 10, **characterized in that** the housing (36) has an anti-rotation safeguard that prevents rotary movement of the connecting rod (46) relative to the housing (36).

12. The wind turbine rotor blade (10) according to one of claims 1 to 11, **characterized in that** the vacuum switching chamber (30) is designed for switching currents of 25 kA or more.

13. The wind turbine rotor blade (10) according to one of claims 1 to 12, **characterized in that** the vacuum switching chamber (30) is arranged in the region of a blade tip (14) of the wind turbine rotor blade (10).

14. The wind turbine rotor blade (10) according to one of claims 1 to 13, **characterized in that** the wind turbine rotor blade (10) has an electrical heating device (20) which is supplied with heating current by the additional electrical line (26).

## Revendications

1. Pale de rotor d'éolienne (10) dotée d'un système de protection contre la foudre (18) et d'une autre ligne électrique (26) séparée galvaniquement du système de protection contre la foudre (18), **caractérisée par** une chambre de commutation sous vide (30) avec une première pièce de contact (32) reliée au système de protection contre la foudre (18), et une deuxième pièce de contact (34) reliée à l'autre ligne électrique (26), et par un dispositif de fixation maintenant les deux pièces de contact (32, 34) éloignées l'une de l'autre selon un espacement prédéfini et présentant des moyens de fixation destinés à empêcher un agrandissement de l'espacement entre les deux pièces de contact (32, 34) en cas de foudre.

2. Pale de rotor d'éolienne (10) selon la revendication 1, **caractérisée en ce que** la chambre de commutation sous vide (30) présente un corps de chambre de commutation sous vide (38), l'une des deux pièces de contact (32, 34) étant montée de façon mobile dans le corps de chambre de commutation sous vide (39) et présentant une barre de raccordement (46) faisant saillie hors du corps de chambre de commutation sous vide (38), le dispositif de fixation présentant une première butée (60) sur laquelle s'applique le corps de chambre de commutation sous vide (38), ainsi que des moyens de fixation pour la fixation de la barre de raccordement (46) dans un agencement prédéfini par rapport à la première butée (60).

3. Pale de rotor d'éolienne (10) selon la revendication 1 ou 2, **caractérisée en ce que** le dispositif de fixation présente un boîtier (36) dans lequel est insérée la chambre de commutation sous vide (30).

4. Pale de rotor d'éolienne (10) selon la revendication 3, **caractérisée en ce que** le boîtier (36) présente un corps de base de boîtier (52) et un fond de boîtier, lequel est vissé dans un filet intérieur (54) du corps de base de boîtier (52), de manière à serrer la chambre de commutation sous vide (30) dans le boîtier (36).

5. Pale de rotor d'éolienne (10) selon la revendication 3 ou 4, **caractérisée en ce qu'**un espace libre entre la chambre de commutation sous vide (30) et le boîtier (36) est rempli avec une masse de scellement (66).

6. Pale de rotor d'éolienne (10) selon la revendication 2 et selon l'une des revendications 3 à 5, **caractérisée en ce que** le boîtier (36) présente un couvercle de palier (62), dont le côté intérieur forme la première butée (60).

7. Pale de rotor d'éolienne (10) selon la revendication 2 et selon l'une des revendications 3 à 6, **caractérisée en ce que** les moyens de fixation présentent une douille de serrage (68) avec une bride (76) vissée sur un filetage de la barre de raccordement (46), la bride (76) s'appuyant sur une deuxième butée (72) du boîtier (36).

8. Pale de rotor d'éolienne (10) selon les revendications 6 et 7, **caractérisée en ce que** les moyens de fixation sont formés par un couvercle de contre-palier (74) du boîtier (36) et par la bride (76) de la douille de serrage (68), la bride (76) étant maintenue par complémentarité de forme entre le couvercle de palier (62) et le couvercle de contre-palier (74).

9. Pale de rotor d'éolienne (10) selon la revendication 7 ou 8, **caractérisée en ce qu'**un câble de liaison est fixé avec serrage entre la douille de serrage (68) et un écrou (82) vissé sur la barre de raccordement (46).

10. Pale de rotor d'éolienne (10) selon l'une des revendications 7 à 9, **caractérisée en ce que** la douille de serrage (68) est vissée aussi loin sur la barre de raccordement (46), que la bride (76) de la douille de serrage (68) s'appuie sur un gradin de la barre de raccordement (46).

11. Pale de rotor d'éolienne (10) selon l'une des revendications 3 à 10, **caractérisée en ce que** le boîtier (36) présente une sécurité anti-rotation empêchant un mouvement de rotation de la barre de raccordement (46) par rapport au boîtier (36).

12. Pale de rotor d'éolienne (10) selon l'une des revendications 1 à 11, **caractérisée en ce que** le chambre de commutation sous vide (30) est configurée pour la commutation d'intensités de courant de 25 kA ou plus.

13. Pale de rotor d'éolienne (10) selon l'une des revendications 1 à 12, **caractérisée en ce que** la chambre de commutation sous vide (30) est disposée dans la région d'une extrémité de pale (14) de la pale de rotor d'éolienne (10).

14. Pale de rotor d'éolienne (10) selon l'une des revendications 1 à 13, **caractérisée en ce que** la pale de rotor d'éolienne (10) présente un dispositif de chauffage électrique (20) alimenté en courant de chauffage par le biais de l'autre ligne électrique (26).
